# EUROPEAN PATENT APPLICATION

(11) **EP 2 603 011 A2**
(43) Date of publication of application: **12.06.2013**
(21) Application number: 12196055.3
(22) Date of filing: 07.12.2012
(51) Int. Cl.: H04N 21/462, H04N 13/00

(54) **Display apparatus and method of display using the same**

(30) Priority: 09.12.2011 KR 20110132022
(71) Applicant: Samsung Electronics Co., Ltd, Gyeonggi-do 443-742 (KR)
(72) Inventor: Jeong, Ju-sun, Gyeonggi-do (KR); Kwon, Hyok-sang, Gyeonggi-do (KR); Nam, Kyung-chul, Gyeonggi-do (KR)
(74) Representative: Walaski, Jan Filip

(57) **Abstract**

A display apparatus and a displaying method using the display apparatus are provided. The display apparatus includes a receiver which receives a broadcasting signal via at least one of a plurality of channels, a display unit which outputs the received broadcasting signal, and a controller which controls the display unit to detect an identifier included in the received broadcasting signal and to display information relating to a channel receiving a broadcasting signal having the same identifier as the detected identifier.

## Description

The present invention relates to a display apparatus and a method of displaying using the same, and more particularly, to a display apparatus which receives and outputs a broadcasting signal and a method for display using the same.

The recent development of contents technologies provides many contents to users via broadcasting channels by using various methods. For example, the same types of contents may be realized as 2-dimensional (2D) images and as 3-dimensional (3D) images and then provided to users via different channels.

In general, users use a sequential search method for changing channels by executing a channel up/down command in order to search for channels. In particular, the users sequentially change channels, check contents which are broadcast on each respective channel, and directly select desired channels.

However, if this method is used, a considerable amount of time is required to search for all contents provided in various ways.

In particular, a user who has watched 2D images may desire to sequentially change channels in order to search for contents relating to the 2D images which are realized as 3D images. Based on the search result, there may not exist a channel which provides the desired 3D images. Therefore, a user who wants to watch such contents in various ways experiences inconvenience.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a display apparatus which detects an identifier included in a broadcasting signal received via at least one of a plurality of channels and displays information relating to a channel receiving a broadcasting signal having the same identifier as the detected identifier, and a method for displaying by using the display apparatus.

According to an aspect of the exemplary embodiments, there is provided a display apparatus. The display apparatus may include: a receiver which receives a broadcasting signal via at least one of a plurality of channels; a display unit which outputs the received broadcasting signal; and a controller which controls the display unit to detect an identifier included in the received broadcasting signal and to display information relating to a channel receiving a broadcasting signal having the same identifier as the detected identifier.

The identifier may include a video identification (ID) which is allocated to each of images constituting the broadcasting signal.

The controller may detect a video ID which is allocated to a 2-dimensional (2D) image received via a first channel and determine whether the detected video ID matches a video ID which is allocated to each of left and right eye images relating to a 3-dimensional (3D) image received via a second channel.

The information relating to the channel may include at least one of a broadcasting contents title, a broadcasting time, and a channel number and a channel name of a channel receiving a broadcasting signal having the same identifier.

The controller may control the display unit to output the information relating to the channel receiving the broadcasting signal having the same identifier in order to distinguish the output information from information relating to another channel in conjunction with use of an electronic program guide (EPG).

The controller may control the display unit to list and display only information relating to a channel receiving a broadcasting signal having the same identifier.

The display unit may output a broadcasting signal received via a channel selected based on a user command. The controller may control the display unit to output information relating to a channel for which a received signal includes the same identifier as an identifier included in the broadcasting signal received via the selected channel.

The display unit may output a broadcasting signal received via a channel selected based on a user command. The controller may control the display unit to output a graphical user interface (GUI) which includes an inquiry relating to whether to select a channel for which a received signal includes the same identifier as an identifier included in the broadcasting signal received via the selected channel.

According to another aspect of the exemplary embodiments, there is provided a displaying method. The display method may include: receiving a broadcasting signal via at least one of a plurality of channels; detecting an identifier included in the received broadcasting signal; and displaying information relating to a channel receiving a broadcasting signal having the same identifier as the detected identifier.

The identifier may include a video ID which is allocated to each of images constituting the broadcasting signal.

The detecting of the identifier may include: detecting a video ID which is allocated to a 2D image received via a first channel and determining whether the detected video ID matches a video ID which is allocated to each of left and right eye images relating to a 3D image received via a second channel.

The information relating to the channel may include at least one of a broadcasting contents title, a broadcasting time, and a channel number and a channel name of a channel receiving a broadcasting signal having the same identifier.

The method may further include outputting the information relating to the channel receiving the broadcasting signal having the same identifier in order to distinguish the output information from information relating to another channel in conjunction with use of an EPG.

Only the information relating to the channel receiving the broadcasting signal having the same identifier may be listed and/or displayed.

The displaying method may further include: outputting a broadcasting signal received via a channel selected based on a user command. The displaying of the information relating to the channel may include outputting information relating to a channel for which a received signal includes the same identifier as an identifier included in the broadcasting signal received via the selected channel.

The displaying method may further include: outputting a broadcasting signal received via a channel selected based on a user command. The displaying of the information relating to the channel may include outputting a GUI which provides an inquiry relating to whether to select a channel for which a received signal includes the same identifier as an identifier included in the broadcasting signal received via the selected channel.

According to the various exemplary embodiments as described above, information relating to a channel via which the same identifier is input may be displayed. Therefore, users may easily check information relating to a channel, which provides contents in various ways, without an additional channel search, and thus may further easily and simply select a desired channel.

The above and/or other aspects will be more apparent by describing certain exemplary embodiments with reference to the accompanying drawings, in which:
FIG. 1 is a block diagram illustrating a structure of a display apparatus according to an exemplary embodiment;
FIG. 2 is a block diagram illustrating a detailed structure of a display apparatus according to an exemplary embodiment;
FIGS. 3A, 3B, and 3C are views illustrating a method for displaying information relating to a channel from which a signal which includes the same video identification (ID) as a signal provided by a currently selected channel is detected;
FIGS. 4A and 4B are views illustrating a method for displaying information relating to a channel from which a signal which includes the same video ID is detected regardless of a currently selected channel; and
FIG. 5 is a flowchart illustrating a displaying method according to an exemplary embodiment.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Further, well-known functions or constructions are not described in detail since they would obscure the exemplary embodiments with unnecessary detail.

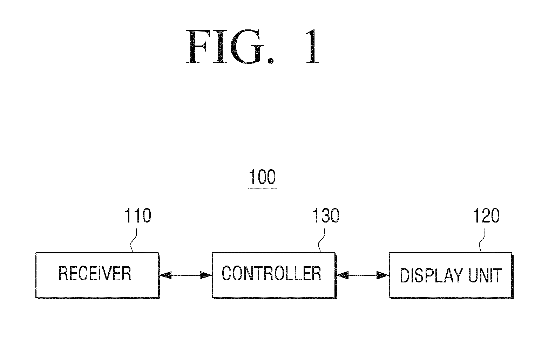

FIG. 1 is a block diagram illustrating a structure of a display apparatus 100 according to an exemplary embodiment. Referring to FIG. 1, the display apparatus 100 includes a receiver 110, a display unit 120, and a controller 130.

The receiver 110 receives a broadcasting signal via at least one of a plurality of channels.

In detail, the receiver 110 receives a broadcasting signal via one or more of a broadcasting station, a satellite, or an external device, by wired communication or by wireless communication, and demodulates the received broadcasting signal.

For example, the receiver 110 may include a tuner which receives a broadcasting signal, or the receiver 110 may include an audio and video (A/V) interface via which an image is input from an external input device. The receiver 110 may also include a plurality of tuners, each of which simultaneously receives a respective broadcasting signal via a corresponding one of a plurality of channels.

The display unit 120 outputs the received broadcasting signal.

In detail, the display unit 120 may output a broadcasting signal which is received via a channel selected by the receiver 110 based on a user command. The display unit 120 which performs the above-described function may include a display panel (not shown) and a panel driver (not shown) which drives the display panel. In particular, the display panel may be realized as a liquid crystal display (LCD), an organic light-emitting display (OLED), or a plasma display panel (PDP), or the like.

The controller 130 controls overall operations of elements of the display apparatus 100. In particular, the controller 130 may control the receiver 110 to receive the broadcasting signal, and may control the display unit 120 to output the received broadcasting signal.

The controller 130 may control the display unit 120 to detect an identifier included in the received broadcasting signal and to display information relating to a channel receiving a broadcasting signal having the same identifier as the detected identifier.

In particular, an identifier may include a video identification (ID) which is allocated to each of images constituting a broadcasting signal. In detail, the video ID may include an identifier which is allocated to each of images in order to distinguish the images from one another, and thus the same images correspond to the same video ID. In this aspect, an image may include a frame or a stream.

Therefore, the controller 130 may respectively detect video IDs which are allocated to images constituting the received broadcasting signal and compare the detected video IDs with one another to detect a channel transmitting the same image. In this manner, the controller 130 may detect a channel via which the same types of contents are transmitted by using a video ID.

For example, a broadcasting signal which includes a 2D image may be received via a first channel. Further, a 3D image, which includes a 2D image as a left or right eye image and also includes an image having a predetermined binocular parallax with respect to the 2D image as a right or left eye image, may be received via a second channel.

In this example, the left or right eye image relating to the 3D image is realized as a 2D image, and thus is associated with the same video ID as the 2D image.

Therefore, the controller 130 may compare the video ID associated with the left or right eye image relating to the 3D image with the video ID associated with the 2D image to determine whether the 2D and 3D images include the same contents.

In detail, the controller 130 detects a video ID associated with a 2D image received via a first channel and determines whether the video ID associated with the 2D image matches a video ID associated with a left or right eye image relating to a 3D image received via a second channel.

If it is determined that the video ID associated with the 2D image matches the video ID associated with the left or right eye image relating to the 3D image, the controller 130 may determine that the 2D image received via the first channel and the 3D image received via the second channel include the same contents.

In the above-described exemplary embodiment, a determination is made as to whether 2D and 3D images are associated with the same video ID. However, this is only an exemplary embodiment. In particular, the controller 130 may determine whether a video ID associated with a 2D image received via a first channel matches a video ID associated with a 2D image received via a second channel. Further, the controller 130 may determine whether a video ID associated with a 3D image received through a particular channel matches a video ID associated with a 3D image received via another channel in order to determine a channel which transmits the same types of contents.

According to another exemplary embodiment, the controller 130 may determine whether respective broadcasting signals having different image qualities include the same types of contents.

In particular, the image qualities of the respective broadcasting signals may be distinguished from each other based on the corresponding numbers of pixels constituting an image, and may include, for example, high definitions (HDs) having resolutions of 1950×1080 and standard definitions (SDs) having lower resolutions than the HDs. As described above, the image qualities of the respective broadcasting signals may be distinguished from each other based on the corresponding numbers of pixels. Therefore, if respective broadcasting signals have different image qualities but include the same types of images, the broadcasting signals are associated with the same video IDs.

Therefore, the controller 130 may detect a video ID associated with an image constituting a broadcasting signal in order to determine whether respective broadcasting signals having different image qualities include the same types of contents. For this purpose, the receiver 110 may be realized to receive an HD broadcasting signal and an SD broadcasting signal, and the controller 130 may decode respective broadcasting signals or may acquire resolution information by using various types of data transmitted from the broadcasting station.

The controller 130 may cause the display unit 120 to display information relating to a channel which receives a broadcasting signal having the same identifier, by using various methods. In particular, the information relating to the channel may include at least one of a channel number of the channel which receives the broadcasting signal having the same identifier, a channel name of the channel, a broadcasting contents title, and a broadcasting time.

In particular, the controller 130 may cause the display unit 120 to display a channel number of a channel which transmits the same types of contents, a channel name of the channel, a broadcasting contents title, and a broadcasting time by using various methods.

For example, the controller 130 may control the display unit 120 to output information relating to a channel receiving a broadcasting signal having the same identifier in order to distinguish the output information from information relating to another channel in conjunction with use of an electronic program guide (EPG).

According to another aspect of the exemplary embodiment, the controller 130 may control the display unit 120 to list and display only information relating to a channel which receives a broadcasting signal having the same identifier.

According to another aspect of the exemplary embodiment, if the display unit 120 outputs a broadcasting signal received via a channel selected based on a user command, the controller 130 may control the display unit 120 to output information relating to a channel for which a received signal includes the same identifier as an identifier included in the broadcasting signal received via the selected channel.

According to another aspect of the exemplary embodiment, if the display unit 120 outputs a broadcasting signal received via a channel selected based on a user command, the controller 130 may control the display unit 120 to output a graphical user interface (GUI) which provides an inquiry relating to whether to select a channel for which a received signal includes the same identifier as an identifier included in the broadcasting signal received via the selected channel.

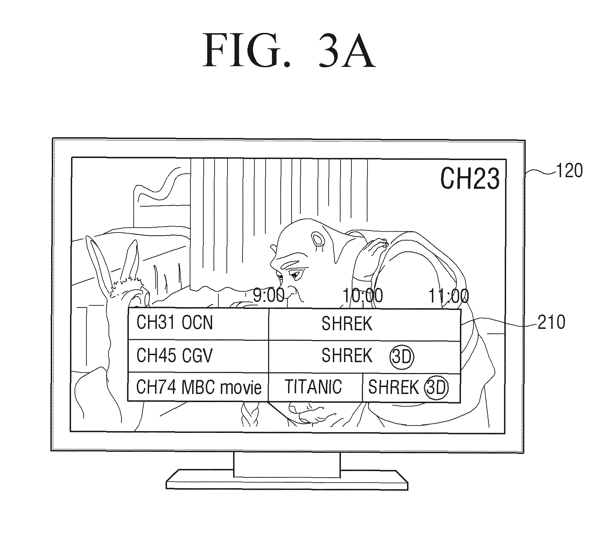

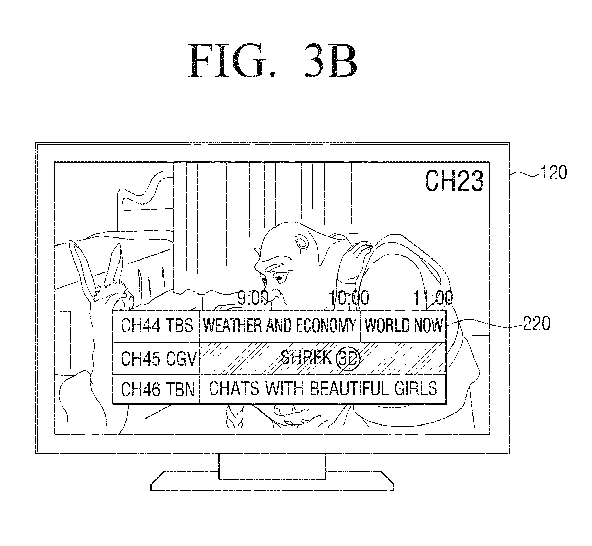

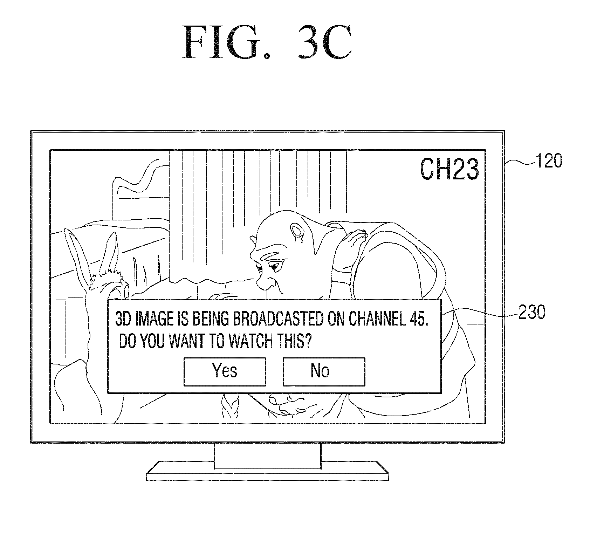

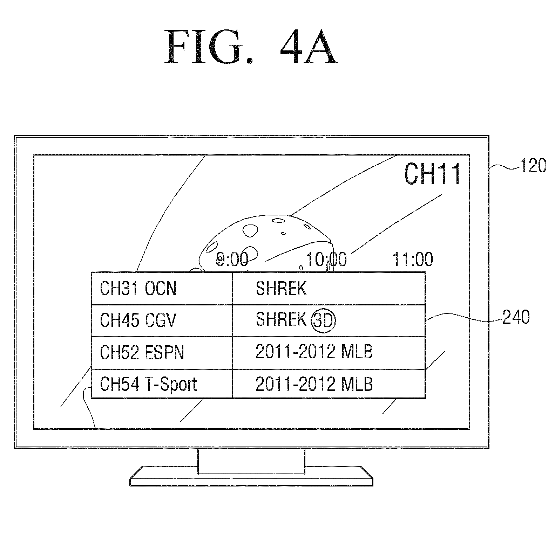

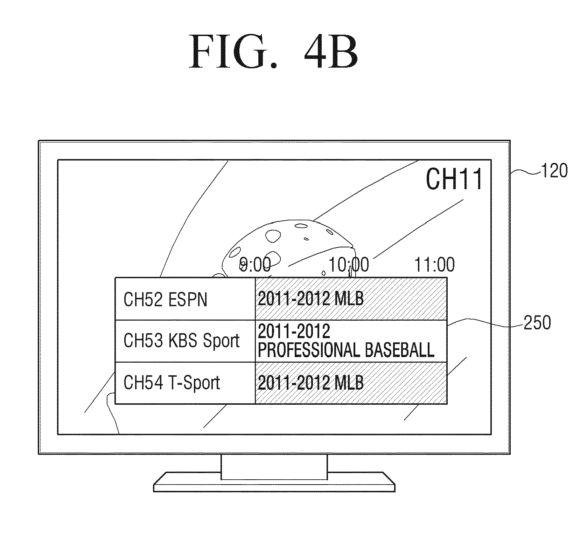

This operation will be described below in more detail with reference to FIGS. 3A, 3B, 3C, 4A, and 4B.

If a channel search command is received, the controller 130 may control the receiver 110 to receive the broadcasting signal via at least one of the plurality of channels. In particular, the channel search command may include a user command which is used to detect video IDs input via one or more of a plurality of channels.

In detail, if the channel search command is received, the controller 130 may sequentially select each respective one of the plurality of channels by using the tuner of the receiver 110 to receive the broadcasting signal via each corresponding one of the plurality of channels. Further, the controller 130 may detect a respective video ID which is allocated to each corresponding one of images constituting the received broadcasting signal.

Even if a user command relating to switching on power of the display apparatus 100 or a channel selection command is received, the controller 130 may sequentially select each respective one of the plurality of channels to detect a video ID received via each corresponding one of the plurality of channels in order to receive the broadcasting signal via each corresponding one of the plurality of channels.

In this case, the controller 130 may sequentially select each respective one of the plurality of channels, select one of the plurality of channels based on the user command or the channel selection command, process a broadcasting signal received via the selected channel, and output the processed broadcasting signal to the display unit120.

However, if the receiver 110 includes a plurality of tuners, the controller 130 may select a channel based on the user command or the channel selection command by using one tuner, and sequentially select each respective one of a plurality of channels by using another tuner to detect a video ID.

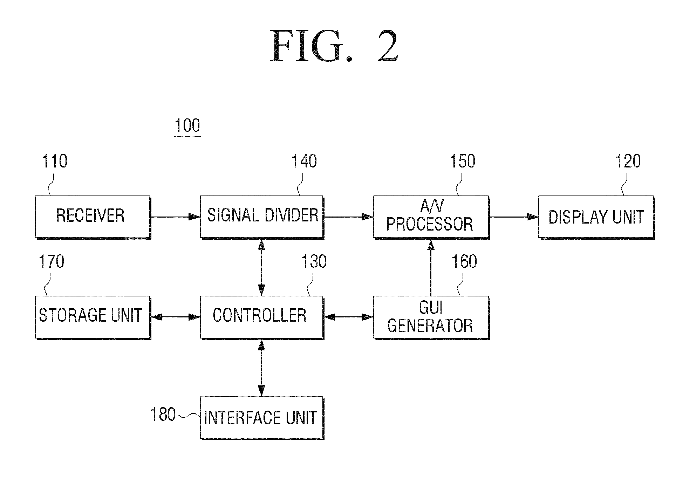

FIG. 2 is a block diagram illustrating a detailed structure of a display apparatus 100 according to an exemplary embodiment. Referring to FIG. 2, the display apparatus 100 includes a receiver 110, a display unit 120, a controller 130, a signal divider 140, an A/V processor 150, a GUI generator 160, a storage unit 170, and an interface unit 180. Elements of FIG. 2 having the same reference numerals as those of FIG. 1 perform the same functions, and thus their repeated descriptions will be omitted.

The signal divider 140 divides a broadcasting signal into a video signal, an audio signal, and broadcasting information. In particular, the broadcasting information may include an EPG for each channel, and the EPG may include, for example, one or more of a title of broadcasting contents, a broadcasting channel, a channel name, a broadcasting time, simple information relating to the broadcasting contents, and other information relating to the broadcasting signal.

The A/V processor 150 performs signal processing, such as, for example, one or more of video decoding, video scaling, audio decoding, and other signal processing functions, with respect to the video and audio signals received from the signal divider 140 in order to process the video and audio signals in formats which may be output by the display unit 120 and an audio output unit (not shown).

The controller 130 may detect video IDs, which are respectively allocated to images, from the video signal divided from the broadcasting signal or video IDs, which are respectively allocated to images, from the broadcasting information.

The GUI generator 160 generates a GUI which is to be displayed by the display unit 120, which adds the generated GUI to an image output from the A/V processor 150.

In particular, the GUI generator 160 may highlight, on the EPG, broadcasting contents which are provided via a channel for which a signal including the same identifier is received, and add the highlighted broadcasting contents to an image which is to be displayed by the display unit 120.

Further, the GUI generator 160 may generate a GUI which lists only information relating to a channel via which a broadcasting signal having the same identifier is received, a GUI which lists information relating to a channel for which a received signal includes the same identifier as an identifier included in a broadcasting signal received through a selected channel, or a GUI which provides an inquiry relating to whether to select a channel for which a received signal includes the same identifier as an identifier included in a broadcasting signal received via a selected channel and adds the generated GUI to an image which is to be displayed by the display unit 120.

In particular, the information relating to the channel may include at least one of a channel number of a channel via which a broadcasting signal having the same identifier is received, a channel name of the channel, a broadcasting program title received from the corresponding channel, and a program time.

The storage unit 170 may store information relating to an identifier included in a broadcasting signal received via at least one of a plurality of channels. In detail, the storage unit 170 may store information relating to video IDs respectively allocated to images constituting a broadcasting signal received via each channel in each time zone. The storage unit 170 which performs this function may be realized as a nonvolatile memory, such as, for example, a hard disk drive (HDD), a flash memory, an electrically erasable and programmable ROM (EEPROM), or the like.

The interface unit 180 may receive a command which is used to control the display apparatus 100 from a remote controller (not shown). For this purpose, the interface unit 180 may include an infrared (IR) receiver (not shown). The interface unit 180 may include an additional control button, such as, for example, a channel up/down button, or another control button, to receive a command to control the display apparatus 100.

FIGS. 3A, 3B, 3C, 4A, and 4B are views illustrating methods for displaying information relating to a channel which receives a broadcasting signal having the same identifier, according to various exemplary embodiments. In particular, an identifier may refer to a video ID which is allocated to each image received via a channel.

The controller 130 receives a broadcasting signal via at least one of a plurality of channels by using the receiver 110, and detects video IDs allocated to respective images constituting the broadcasting signal. In particular, if a 3D image is received via a particular channel, the controller 130 may respectively detect video IDs allocated to each of left and right eye images relating to the 3D image.

The controller 130 may decode the received broadcasting signal, or may detect an image quality and an image type (e.g., a 2D image or a 3D image) of a broadcasting signal, which is received through each respective one of the channels, by using various types of data transmitted from a broadcasting station.

The controller 130 stores the detected video IDs, the detected image quality, and the detected image type, in the storage unit 170. The controller 130 processes a broadcasting signal received via a channel selected based on a channel selection command received from a user, and outputs the processed broadcasting signal to the display unit 120.

If a channel search command is received, the controller 130 controls the GUI generator 160 to generate a GUI, which lists information relating to a channel from which a received signal which includes the same video ID has been detected, and outputs the GUI to the display unit 120. In particular, the channel search command may refer to a user command to search for and display a channel for which a received signal includes the same video ID, i.e., a channel by which the same types of contents are transmitted.

In this case, the controller 130 may display information relating to a channel from which a received signal which includes the same video ID as that of a received signal from a currently selected channel has been detected, or information relating to a channel from which a received signal which includes the same video ID has been detected, regardless of the currently selected channel.

FIGS. 3A, 3B, and 3C are views illustrating a method for displaying information relating to a channel from which a received signal which includes the same video ID as that of a received signal from a currently selected channel has been detected. In the present exemplary embodiment, "Shrek" is being broadcasted on channel 23, which has been selected based on a channel selection command, and a video ID associated with "Shrek" is "0x31." Further, an image having the same video ID as the video ID "0x31," i.e., "Shrek," may be received via any one of channels 31, 45, and 74.

If a channel search command is received, the controller 130 searches for a channel via which an image having the same video ID as the currently selected channel 23 is received, based on video ID information stored in the storage unit 170.

According to the present exemplary embodiment, images which are received through channels 31, 45, and 74 have the same video ID, which is "0x31". Therefore, as shown in FIG. 3A, the controller 130 may output a GUI 210, which is a list type GUI including channel names and channel numbers of channels 31, 45, and 74 from which the same video ID as that of currently selected channel 23 have been detected, a broadcasting contents title, and a broadcasting time, to the display unit 120.

For this purpose, the controller 130 may detect a video ID which is associated with a channel at each time when broadcasting contents are changed, based on EPG information. For example, the controller 130 may sequentially select the channels 31 and 45 at 9 to detect a respective video ID allocated to a corresponding image received via each of the channels 31 and 45. Further, the controller 130 may select channel 74 at 9 and 10, respectively, to respectively detect a video ID allocated to an image received via the channel 74 at 9 and a video ID allocated to an image received via the channel 74 at 10. The detected video IDs may be respectively mapped on channels and then stored in the storage unit 170.

The controller 130 may display an image quality and an image type in conjunction with the GUI 210. In particular, as shown in FIG. 3A, the controller 130 may display contents, which are received via the channel 45, as a 3D image relating to "Shrek," and contents, which are received via the channel 74, as "Shrek" having an HD image quality.

The controller 130 may highlight and display a channel which is associated with the same video ID as a currently selected channel on the EPG.

In one example, as shown in FIG. 3B, when the controller 130 outputs the EPG to the display unit 120, the controller 130 may highlight and display the channel 45, which receives an image associated with the same video ID as the image "Shrek" which is being received via the currently selected channel 23, on the EPG.

The controller 130 may also output a GUI which provides an inquiry relating to whether to select a channel which is associated with the same video ID as a currently selected channel. In particular, if a channel via which a received signal that includes an image having a different image quality or a different image type from a corresponding signal being provided via a currently selected channel is searched, the controller 130 may output a GUI which provides an inquiry relating to whether to select the searched channel.

In the present exemplary embodiment, "Shrek," as realized in a signal which includes 2D images, is received via channel 23, which has been selected based on the channel selection command. Further, "Shrek," which is associated with the same video ID as the "Shrek" realized in the signal which includes 2D images but is itself realized in a signal which includes 3D images, is received via channel 45.

In this example, as shown in FIG. 3C, the controller 130 may output a GUI 230 which recognizes that "Shrek," as realized in the signal which includes 3D images, is being broadcasted on the channel 45, and provides an inquiry relating to whether to select the channel 45, i.e., whether the user would like to watch "Shrek" in 3D. Therefore, if a user selects "Yes" on the GUI 230, the controller 130 may select the channel 45, process the "Shrek" program as realized in the signal which includes 3D images, and output the processed "Shrek" program to the display unit 120.

The controller 130 may output information relating to a channel which provides the same video ID regardless of a currently selected channel to the display unit 120. In the present exemplary embodiment, it may be assumed that "Animal Kingdom," which is associated with video ID "0x32," is being broadcasted on channel 11, which has been selected based on a channel selection command; "Shrek," which is associated with video ID "0x31," is being broadcasted on each of channels 31 and 45, and "2011∼2012 MLB," which is associated with video ID "0x33," is being broadcasted on each of channels 52 and 54.

In this example, the controller 130 may list and output only information relating to a channel which is associated with the same video ID regardless of currently selected channel 11.

In particular, as shown in FIG. 4A, the controller 130 may output a GUI 240, which lists only information relating to channels 31 and 45, each of which is associated with video ID "0x31" and is broadcasting "Shrek," and information relating to channels 52 and 54, each of which is associated with video ID "0x33" and is broadcasting "2011∼2012 MLB", to the display unit 240.

According to an aspect of the exemplary embodiment, the controller 130 may highlight and output information relating to a channel via which a signal or a program that is associated with the same video ID is received regardless of a currently selected channel, on the EPG.

In particular, as shown in FIG. 4B, the controller 130 may highlight channels 52 and 54, each of which is associated with the same video ID, on an EPG 250, in order to output the channels 52 and 54 on the display unit 120.

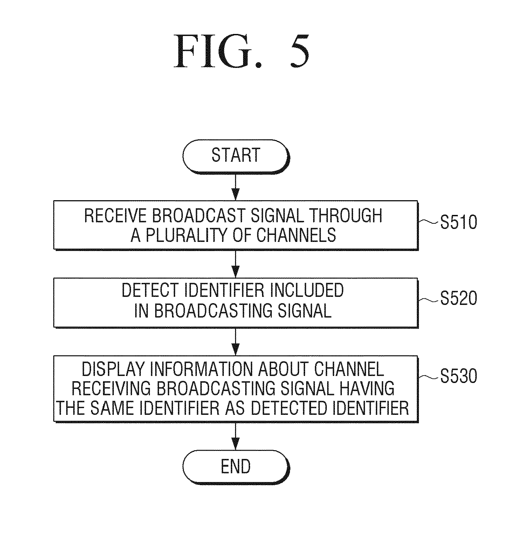

FIG. 5 is a flowchart illustrating a displaying method according to an exemplary embodiment.

In operation S510, a broadcasting signal is received via at least one of a plurality of channels.

In operation S520, an identifier included in the received broadcasting signal is detected. In particular, the identifier may include a video ID which is allocated to each of images constituting the broadcasting signal.

For example, a video ID which is allocated to a 2D image received via a first channel may be detected, and a video ID which is allocated to each of left and right eye images relating to a 3D image received via a second channel may be detected to determine whether the two detected video IDs are the same.

According to another aspect of the exemplary embodiment, video IDs which are allocated to respective images constituting corresponding broadcasting signals having different image qualities may be detected and compared to determine whether the detected video IDs are the same.

In operation S530, information relating to a channel receiving a broadcasting signal having the same identifier as the detected identifier is displayed.

The information relating to the channel may include at least one of a broadcasting contents title, a broadcasting time, and a channel number and a channel name of a channel receiving a broadcasting signal having the same identifier.

In detail, information relating to a channel receiving a broadcasting signal having the same identifier may be output in order to distinguish the output information from information relating to another channel in conjunction with use of an EPG.

According to another aspect of the exemplary embodiment, only information relating to a channel receiving a broadcasting signal having the same identifier may be listed and displayed.

According to another aspect of the exemplary embodiment, a broadcasting signal received via a channel selected based on a user command may be output. Further, information relating to a channel for which a received signal includes the same identifier as an identifier included in the broadcasting signal received through the selected channel may be output.

According to another aspect of the exemplary embodiment, a broadcasting signal received via a channel selected based on a user command may be output. Further, a GUI which provides an inquiry relating to whether to select a channel for which a received signal includes the same identifier as an identifier included in the broadcasting signal received via the selected channel may be output.

These detailed displaying methods have been described above with reference to FIGS. 3A, 3B, 3C, 4A, and 4B.

The present inventive concept can also be embodied as computer readable code on a computer readable recording medium, including, for example, a non-transitory computer readable recording medium. The computer readable recording medium may include any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network-coupled computer systems so that the computer readable code may be stored and executed in a distributed fashion.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a receiver which receives a broadcasting signal via at least one of a plurality of channels;
a display unit which outputs the received broadcasting signal; and
a controller which controls the display unit to detect an identifier included in the received broadcasting signal and to display information relating to a channel receiving a broadcasting signal having the same identifier as the detected identifier.

2. The display apparatus of claim 1, wherein the identifier includes a video identification (ID) which is allocated to each of images constituting the broadcasting signal.

3. The display apparatus of claim 2, wherein the controller detects a video ID which is allocated to a 2-dimensional (2D) image received via a first channel and determines whether the detected video ID matches a video ID which is allocated to each of left and right eye images relating to a 3-dimensional (3D) image received via a second channel.

4. The display apparatus of anyone of claims 1 to 3, wherein the information relating to the channel comprises at least one of a broadcasting contents title, a broadcasting time, and a channel number and a channel name of a channel receiving a broadcasting signal having the same identifier.

5. The display apparatus of anyone of claims 1 to 4, wherein the controller controls the display unit to output the information relating to the channel receiving the broadcasting signal having the same identifier in order to distinguish the output information from information relating to another channel in conjunction with use of an electronic program guide (EPG).

6. The display apparatus of anyone of claims 1 to 5, wherein the controller controls the display unit to display only information relating to a channel receiving a broadcasting signal having the same identifier.

7. The display apparatus of anyone of claims 1 to 6, wherein:
the display unit outputs a broadcasting signal received via a channel selected based on a user command; and
the controller controls the display unit to output information relating to a channel for which a received signal includes the same identifier as an identifier included in the broadcasting signal received via the selected channel.

8. The display apparatus of anyone of claims 1 to 7, wherein:
the display unit outputs a broadcasting signal received via a channel selected based on a user command; and
the controller controls the display unit to output a graphical user interface (GUI) which provides an inquiry relating to whether to select a channel for which a received signal includes the same identifier as an identifier included in the broadcasting signal received via the selected channel.

9. A displaying method comprising:
receiving a broadcasting signal via at least one of a plurality of channels;
detecting an identifier included in the received broadcasting signal; and
displaying information relating to a channel receiving a broadcasting signal having the same identifier as the detected identifier.

10. The displaying method of claim 9, wherein the identifier includes a video identification (ID) which is allocated to each of images constituting the broadcasting signal.

11. The displaying method of claim 10, wherein the detecting of the identifier comprises:
detecting a video ID which is allocated to a two-dimensional (2D) image received via a first channel and determining whether the detected video ID matches a video ID which is allocated to each of left and right eye images relating to a three-dimensional (3D) image received via a second channel.

12. The displaying method of anyone of claims 9 to 11, wherein the information relating to the channel comprises at least one of a broadcasting contents title, a broadcasting time, and a channel number and a channel name of a channel receiving a broadcasting signal having the same identifier.

13. The displaying method of anyone of clams 9 to 12, further comprising outputting the information relating to the channel receiving the broadcasting signal having the same identifier in order to distinguish the output information from information relating to another channel in conjunction with use of an electronic program guide (EPG).

14. The displaying method of anyone of claims 9 to 13, wherein only information relating to a channel receiving a broadcasting signal having the same identifier is displayed.

15. The displaying method of anyone of claims 9 to 14, further comprising:
outputting a broadcasting signal received via a channel selected based on a user command,
wherein the displaying of the information relating to the channel comprises outputting information relating to a channel for which a received signal includes the same identifier as an identifier included in the broadcasting signal received via the selected channel.
